Europäisches Patentamt

European Patent Office

Office européen des brevets

(19)

(11) Publication number: **0 305 759**
**A1**

## (12) EUROPEAN PATENT APPLICATION

(21) Application number: **88112635.3**

(22) Date of filing: **03.08.88**

(51) Int. Cl.⁴: **C04B 35/58**

(30) Priority: **31.08.87 US 92270**

(43) Date of publication of application:
**08.03.89 Bulletin 89/10**

(84) Designated Contracting States:
**CH DE FR GB IT LI**

(71) Applicant: **GTE LABORATORIES**
**INCORPORATED**
**1209 Orange Street**
**Wilmington Delaware 19801(US)**

(72) Inventor: **Su, Sophia R.**
**100 Hickory Road**
**Weston, MA 02193(US)**

(74) Representative: **Patentanwälte Grünecker,**
**Kinkeldey, Stockmair & Partner**
**Maximilianstrasse 58**
**D-8000 München 22(DE)**

(54) **Si3N4 Process using polysilane or polysilazane as a binder.**

(57) A process for making a densified silicon nitride article utilizing polysilanes or polysilazanes as a binder is described. The process involves blending of a silicon nitride composition with a polysilane or a polysilazane to form a mixture. The mixture is molded into an article. The article is then pyrolyzed in a non-oxidizing atmosphere and at a temperature sufficient to form a pyrolyzed article comprising amorphous silicon nitride and silicon carbide. The article is then sintered at a temperature equal to or greater than 1400° C to form a densified silicon nitride article.

## Si$_3$N$_4$ PROCESS USING POLYSILANE OR POLYSILAZANE AS A BINDER

This invention relates to a method for making silicon nitride articles.

More particularly, this invention relates to a method for making silicon nitride articles using polysilane, or polysilazane as a binder.

In recent years, the search for cost-effective production of complex ceramic shapes used at elevated temperatures has stimulated the research and development of metal organic polymer precursors. Fine ceramics made from metal organic precursors has several advantages over the ceramics produced by the conventional processing. For example, low temperature forming processes can be used to produce complex shape by a variety of forming techniques. A wide range of purities can be achieved through careful balance of chemical stoichiometry. The opportunity to chemically purify starting materials and assure homogeneous mixing can improve the uniformity and reliability of the final product.

Strength-limiting factors in high-performance technical ceramics are not always directly related to composition. As the desired shapes get more complicated, it becomes more and more difficult to fabricate parts reliably and free of cracks. One of the problems encountered frequently in fabricating ceramic parts is the binder used in injection molding process. The binder's physical properties must satisfy stringent requirements to allow complete filling of complicated shaped molds without forming density gradients, and the binder must be completely removed prior to sintering without causing physical defects. Organic hydrocarbon-polymers are currently used for this purpose. However, there are problems such as low powder packing densities and the length of time necessary to remove the binders. In addition, the molded articles have a poor green strength after binder removal. As a result, there is excessive shrinkage when the molded article is sintered which makes it difficult to maintain the dimensional precision of the molded article after sintering. Therefore, the exploration of novel binder materials is needed to alleviate these problems.

In accordance with one aspect of the present invention, a new and improved method for making silicon nitride articles comprising the following steps:

Step 1 - blending a mixture comprising a silicon nitride composition and polysilane to form a blended mixture, said silicon nitride composition comprising silicon nitride and a densification aid;

Step 2 - molding the product from step 1 to form a molded article;

Step 3 - pyrolyzing the product from step 2 in a non-oxidizing atmosphere and at a temperature sufficient to form a pyrolyzed article comprising amorphous silicon nitride and silicon carbide; and

Step 4 - sintering the product from step 3 in a non-oxidizing atmosphere and at a temperature sufficient to form a densified silicon nitride article, said densified silicon nitride article having a density equal or greater than 2.94g/cc.

In accordance with another aspect of the present invention, a new and improved method for making silicon nitride articles comprises the following steps:

Step 1 - A mixture comprising a silicon nitride composition and polysilazane is blended to form a blended mixture.

Step 2 - The product step 1 is molded to form a molded article.

Step 3 - The product from step 2 is pyrolyzed in a non-oxidizing atmosphere and at a temperature sufficient to form a pyrolyzed article comprising amorphous silicon nitride and silicon carbide.

Step 4 - The product from step 3 is sintered at a temperature sufficient to form a densified silicon nitride article.

This invention utilizes polysilane, or polysilazane as a binder for the processing of Si$_3$N$_4$ based composites, such as PY6 and AY6 materials. The PY6 composition comprises about 6 weight percent Y$_2$O$_3$ as a densification aid and Si$_3$N$_4$ which contains 1-4 weight percent SiO$_2$ preferably 3 weight percent SiO$_2$. The AY6 composition comprises about 2 weight percent Al$_2$O$_3$, about 6 weight percent Y$_2$O$_3$, both densification aids, and Si$_3$N$_4$ which contains about 1-4 weight percent SiO$_2$ preferably 3 weight percent SiO$_2$.

The specific binders selected were MIT's thermal plastic polysilazane, and Union Carbide's thermoset vinylic polysilane, both having good flow properties and high ceramics yield upon pyrolysis. As illustrated in Tables I, II and II, silicon nitrate based composite mixture was formulated at three different binder concentrations using polysilane or polysilazane.

The first mixture contained about 10 weight percent binder and about 90 weight percent AY6, the second contained about 25 weight percent binder and about 75 weight percent AY6, and the third contained 40 weight percent binder and 60 weight percent AY6. The mixture was blended either by dry blending or dispersing by sonicating a solution containing the binder, AY6, and toluene forming a slurry suspension. The slurry was dried to form a powder. The resulting powders were then sifted through a 200 mesh screen prior to pressing at 6,000 psi in a die press (1" diameter disc or 1/2" diameter pellets). The binder removal (burn out) was carried out in nitrogen, a non-oxidizing atmosphere. The composite pellets and discs were embedded in a setter powder made of the same material as the initial AY6 powder. The resulting pellets and discs of the composites using polysilane as a binder were heated at a rate of 3° C/min to 700° C, held for 1 1/2 hrs, and then cooled at a rate of 10° C/min to room temperature. A slightly different schedule was applied to the composites using polysilazane as the binder. They were heated at a rate of 5° C/min to 900° C, held for 3 hrs, and cooled at a rate of 5° C/min to room temperature. The volatile decomposition products from the pyrolysis step diffused out of the composite without causing internal cracking as noted by microfocus x-ray imaging analysis and scanning electron microscopy.

Example 1

2.72 grams of polysilane were added to 32 ml of toluene and stirred until dissolved. 7.49 grams of AY6 powder (silicon nitride containing alumina and yttria sintering aids) was dispersed in the toluene mixture with a sonicator for 10 minutes. The toluene solvent was evaporated by heating in a nitrogen stream. The resulting powder was sifted through 150 mesh screen and pressed into 1 gram pellets utilizing a 6000 lb. per square inch pressure which was applied twice to form the pellet. The resulting pellet was then heated to 900° C at a rate of 5° C per minute and held for 1 hour forming an amorphous silicon nitride and silicon carbide. Then it was sintered at 1850° C at 200 psi nitrogen pressure for 3 hours to form a densified silicon nitride pellet.

Example 2

1.08 grams of polysilazane were dissolved in 30 ml of toluene and dispersed with 9 grams of $AY_6$ - (silicon nitride having alumina and yttria as sintering aids) and 0.5 grams (5 wt%) oleic acid. The mixture was sonicated for 10 minutes. The powder was dried with stirring and sieved through a 100 mesh screen. The sieved powder was then pressed into a 4 gram disc using 6000 lbs. per square inch pressure. The disc was then heated in a nitrogen atmosphere to a temperature of 900° C at a rate of 5° C per minute and held at temperature for 1 hour then cooled. This was then sintered at 1750° C for 3 hours in a nitrogen atmosphere forming a densified silicon nitride disc having a density of 3.098 grams per cubic centimeter.

Example 3

Slip-Isostatically Pressed Billets were prepared by dispersing 85 grams of a $AY_6$ powder in 100 ml of a toluene solution containing 15 grams of polysilane. The mixture was sonicated for 10 minutes to form a slurry. The slurry was then dried in air. The dried powder (20-25 grams) was added to 9 to 14 ml of isopropanol to make a slip. The slip was sonicated and poured into the cavity of a rubber mold ( $1\frac{1}{2}$ " x $\frac{1}{2}$ ") and vacuum filtered on a porous bronze filter to form a filter cake. The cake was then isostatically pressed at 23,000 psi for 2 minutes forming a pressed billet. The pressed billet was dried in a dissicator for 12 hours prior to burnout. The binder in the billet was burned out by heating in a nitrogen non-oxidizing atmosphere at a rate of 1.0 to 2.5° C/min to 900° C, and held at 900° C for 5 hours then cool down to room temperature at a rate of 2.5° C/min. The billet was then sintered at 1850° C in a 200 psi nitrogen atmosphere (overpressure) for 4 hours.

Example 4

Billets were also prepared by dispersing 39 grams of a AY6 powder into a 30 ml of toluene solution containing 6.5 grams of polycarbosilane by sonicating the dispersion to form a slurry. The slurry was then poured into the cavity of a rubber mold ($1\frac{1}{2}$ " x $\frac{1}{2}$ ) and vacuum filtered on a porous bronze filter to form a filter cake. The cake was either isostatically pressed or set for 2 hrs at 90° C prior to the removal from the mold. The billet was then sintered at 1850° C in a 200 psi (overpressure) nitrogen atmosphere (non-oxidizing atmosphere) for 4 hours.

Two slip-isostatically pressed billets containing 25 wt% polysilazane and 75 wt% AY6 powders were found to remain intact after the binder burnout cycle and were sintered to 3.1 to 3.2 g/cc nominal density at 1850°C 200 psi $N_2$ overpressure. The similar results were obtained from billets containing 25 wt% polysilane and 75 wt% AY6 as illustrated in Table IV of the sintering results. Slip-cast billets prepared from the same compositions were also sintered to high density composites at 1850°C, 200 psi $N_2$ overpressure. The mechanical strength of these sintered, fully dense composites has been determined by 4 point MOR testing from 25°C to 1400°C. The oxidation rate at 1000°C was also determined after 600 hr. exposure. The results are comparable to those of the conventional AY6.

The mechanical strength and oxidation resistance properties, oxidation rate constant, obtained after 600 hrs at 1000°C of samples 28-35, are illustrated in Table V. The sintering results are summarized in Table IV.

This invention provides a method for improving the uniformity and reliability of the final product. The green strength is improved and the amount of shrinkage upon sintering is reduced improving the dimensional precision of the molded article after sintering. In addition, the sintered article is free of internal cracking which is a serious problem with other methods.

While there has been shown and described what is at present considered the preferred embodiment of the invention, it will be obvious to those skilled in the art that various changes and modifications may be made therein without departing from the scope of the invention as defined by the appended claims.

TABLE I

| Sample No. | Composition | Shape-Forming Technique | Density g/cc After Binder Burnout | Sintering Conditions |
|---|---|---|---|---|
| 1 | 40 wt% polysilane 60 wt% AY6 | Die Pressed-6,000 psi 1/2" pellets | 1.61 | 1850°C - 60 psi $N_2$ overpressure |
| 2 | Same | Same | 1.65 | 1900°C - 200 psi $N_2$ overpressure |
| 3 | 25 wt% polysilane 75 wt% AY6 | Same | 1.59 | 1750°C - 60 psi $N_2$ overpressure |
| 4 | Same | Die Pressed-6,000 psi, 1" Disc | 1.36 | 1850°C - 60 psi $N_2$ overpressure |
| 5 | 25 wt% polysilane 75 wt% AY6 + 5 wt% oleic acid based on AY6 | Same | 1.55 | 1750°C - 60 psi $N_2$ overpressure |
| 6 | Same | Die Pressed-6,000 psi 1/2" pellets | 1.62 | 1850°C 3 hrs. 60 psi $N_2$ overpressure |
| 7 | 10 wt% polysilane 90 wt% AY6 | Same | 1.92 | 1850°C - 75 psi $N_2$ overpressure |
| 8 | Same | Same | 1.98 | 1700°C - 12 psi $N_2$ overpressure |
| 9 | Same | Same | 1.98 | 1900°C - 200 psi $N_2$ overpressure |
| 10 | Same | Same | 1.93 | 1700°C - 12 psi $N_2$ overpressure |

TABLE II

| Sample No. | Composition | Shape-Forming Technique | Density g/cc After Binder Burnout | Sintering Conditions |
|---|---|---|---|---|
| 11 | 40 wt polysilazane<br><br>60 wt% AY6 | Die Pressed-6,000 psi 1/2" pellets | 1.87 | 1850°C - 60 psi $N_2$ overpressure |
| 12 | Same | Same | 1.94 | 1850°C - 70 psi $N_2$ overpressure |
| 13 | Same | Same | 1.90 | 1685°C - 8 psi $N_2$ overpressure |
| 14 | 25 wt% polysilazane<br><br>75 wt% AY6 | Die Pressed-6,000 psi, 1" Disc | 2.23 | 1850°C, 3 hrs. 60 psi $N_2$ overpressure |
| 15 | Same | Same | 2.25 | 1850°C - 60 psi $N_2$ overpressure |
| 16 | 25 wt% polysilazane<br><br>75 wt% AY6<br>+ 5 wt% oleic acid<br>based on AY6 powders | Same | 2.16 | 1850°C - 60 psi $N_2$ overpressure |
| 17 | Same | Same | 2.19 | 1850°C - 60 psi $N_2$ overpressure |
| 18 | 10 wt% polysilazane<br><br>90 wt% AY6 | Same | 2.18 | 1750°C - 60 psi $N_2$ overpressure |
| 19 | Same | Same | 2.17 | 1850°C - 60 psi $N_2$ overpressure |
| 20 | 10 wt% polysilazane<br><br>90 wt% AY6<br>+ 5 wt% oleic acid<br>based on AY6 powder | Same | 2.12 | 1750°C - 60 psi $N_2$ overpressure |

TABLE III

| Sample No. | Composition | Shape-Forming Technique | Density g/cc AfterBinder Burnout | Sintering Conditions |
|---|---|---|---|---|
| 21 | 20 wt% polysilazane 80 wt% AY6 | Isostatically Pressed billet | -- | 1850° C/50 psi $N_2$ overpressure 4 hrs. 1850° C/200 psi $N_2$ overpressure 4 hrs. |
| 22 | 16 wt% polysilane 84 wt% AY6 | Same | 2.06 | Same |
| 23 | 20 wt% polysilane 80 wt% AY6 | Same | 1.79 | Same |
| 24 | 25 wt% polysilane 75 wt% AY6 | Same | 1.79 | Same |
| 25 | Same | Same | 1.79 | Same |
| 26 | 10 wt% polysilane 90 wt% AY6 | Same | 1.91 | Same |
| 27 | 15 wt% Polysilane 85 wt% AY6 | Same | 1.73 | Same |
| 28 | 15 wt% Polysilane 85 wt% AY6 | Slip-Isostatically Pressed Billet | 1.54 | Same |
| 29 | Same | Same | 1.73 | Same |
| 30 | Same | Same | 1.77 | Same |
| 31 | Same | Same | 1.75 | Same |
| *32 | Same | Same | 1.64 | Same |
| *33 | Same | Same | 1.73 | Same |
| *34 | Same | Same | 1.75 | Same |
| *35 | Same | Same | 1.58 | Same |

* AY6 powders contain: 2.64 wt% $Al_2O_3$; 7.68 to 8.47 wt% $Y_2O_3$

TABLE IV

| Sample no. | Sintered Density g/cc | XRD Phase Identification |
|---|---|---|
| 1 | 3.12 | beta-$Si_3N_4$ |
| 2 | 3.21 | Major: beta-$Si_3N_4$,<br>Trace: SiC |
| 3 | 3.04 | |
| 4 | 3.11 | Major: beta-$Si_3N_4$<br>Minor: $Si_3N_4$-$Y_2O_3$-$SiO_2$ |
| 5 | 2.95 | beta-$Si_3N_4$ |
| 6 | 3.05 | Major: beta-$Si_3N_4$<br>Minor: $Si_3N_4$-$4Y_2O_3$-$SiO_2$ |
| 7 | 3.18 | Major: beta-$Si_3N_4$<br>Minor: $Si_3N_4$-$SiO_2$-$4Y_2O_3$<br>Trace: $YNSiO_2$ |
| 8 | 3.11 | Major: beta-$Si_3N_4$<br>Minor: $YNSiO_2$, $Y_2Si_2O_5$ |
| 9 | 3.15 | Major: beta-$Si_3N_4$<br>Minor: $Y_2Si_2O_5$, $YNSiO_2$ |

TABLE IV (cont'd)

| Sample no. | Sintered Density g/cc | XRD Phase Identification |
|---|---|---|
| 10 | 3.03 | Major: beta-$Si_3N_4$<br>Minor: $Y_2Si_2O_5$, $YNSiO_2$ |
| 11 | 3.02 | Major: beta-$Si_3N_4$<br>Minor: $Y_2O_3$-$Si_3N_4$ |
| 12 | 2.96 | Major: beta-$Si_3N_4$<br>Minor: $Y_2O_3$-$Si_3N_4$ |
| 13 | 2.94 | Major: beta-$Si_3N_4$<br>Minor: $Y_2O_3$-$Si_3N_4$<br>Trace: alpha-$Si_3N_4$ |
| 14 | 3.14 | Major: beta-$Si_3N_4$<br>Minor: $Si_3N_4$-$Y_2O_3$ |
| 15<br>16 | 3.16<br>3.12 | --<br>-- |
| 17 | 3.16 | Major: beta-$Si_3N_4$<br>Minor: $Si_3N_4$-$Y_2O_3$ |
| 18 | 3.21 | Major: beta-$Si_3N_4$<br>Minor: $Si_3N_4$-$Y_2O_3$ |
| 19 | 3.20 | Major: beta-$Si_3N_4$<br>Minor: $Si_3N_4$-$Y_2O_3$ |
| 20 | 3.10 | beta-$Si_3N_4$ |

TABLE IV (cont'd)

| Sample no. | Sintered Density g/cc | XRD Phase Identification |
|---|---|---|
| 21 | 3.05 | Major: beta $Si_3N_4$<br>Minor: $YSi_2ON$ |
| 22 | 3.16 | Major: beta $Si_3N_4$<br>Minor: $5Y_2O_3$-$Si_3N_4$-$Al_2O_3$ |
| 23 | 3.24 | Major: beta-$Si_3N_4$<br>Minor: $5Y_2O_3$-$Al_2O_3$ |
| 24 | 3.07 | Major: beta $Si_3N_4$<br>Minor: $Y_2O_3$-$Si_3N_4$<br>Weak: SiC |
| 25 | 3.03 | Major: beta $Si_3N_4$<br>Weak: $5Y_2O_3$-$Si_3N_4$-$Al_2O_3$ |
| 26 | 3.13 | beta-$Si_3N_4$ |
| 27 | 3.10 | Major: beta-$Si_3N_4$<br>Minor: $5Y_2O_3$-$Si_3N_4$-$Al_2O_3$, SiC |
| 28 | 3.16 | Major: beta-$Si_3N_4$<br>Minor: $YSi_2ON$ |

TABLE IV (cont'd)

| Sample no. | Sintered Density g/cc | XRD Phase Identification |
|---|---|---|
| 29 | 3.25 | -- |
| 30 | 3.25 | -- |
| 31 | 3.26 | -- |
| 32 | 3.36 | -- |
| 33 | 3.30 | -- |
| 34 | 3.29 | -- |
| 35 | 3.28 | beta-$Si_3N_4$ |

TABLE V

| MECHANICAL STRENGTH AND OXIDATION RESULTS | | | | |
|---|---|---|---|---|
| Sample No. | AVERAGE MODULUS OF RUPTURE (KSI) AT | | | OXIDATION RATE CONSTANT ($Kg^2M^{-4}sec^{-1}$) |
| | Room Temp. | 1000°C | 1200°C | 1400°C | |
| 28-31 | 109 | 99.5 | 78.4 | 38 | $2.14 \times 10^{-3}$ to $5.08 \times 10^{-3}$ |
| 32-35 | 110 | 111 | 71 | 28 | $1.20 \times 10^{-3}$ to $3.50 \times 10^{-13}$ |

## Claims

1. The method for making silicon nitride articles comprising the following steps:

Step 1 - blending a mixture comprising a silicon nitride composition and polysilane to form a blended mixture, said silicon nitride composition comprising silicon nitride and a densification aid;

Step 2 - molding the product from step 1 to form a molded article;

Step 3 - pyrolyzing the product from step 2 in a non-oxidizing atmosphere and at a temperature sufficient to form a pyrolyzed article comprising amorphous silicon nitride and silicon carbide; and

Step 4 - sintering the product from step 3 in a non-oxidizing atmosphere and at a temperature sufficient to form a densified silicon nitride article, said densified silicon nitride article having a density equal or greater than 2.94g/cc.

2. A method in accordance with claim 1 wherein said molding of step 2 comprises slip-isostatic pressing.

3. A method in accordance with claim 1 wherein said molding of step 2 comprises pressing.

4. A method in accordance with claim 1 wherein said molding of step 2 comprises slip casting.

5. A method in accordance with claim 1 wherein said densification aid is selected from the group consisting of alumina, yttria and combinations thereof.

6. A method in accordance with claim 1 wherein said mixture comprises from about 10 wt.% to about 40 wt.% of said polysilane.

7. A method in accordance with claim 1 wherein said pyrolyzing in step 3 comprises heating at a temperature greater than 750°C in a nitrogen atmosphere for a period sufficient to form an article comprising amorphous silicon nitride and silicon carbide.

8. A method in accordance with claim 1 wherein said sintering in step 4 comprises heating at a temperature equal to or greater than 1400°C in a nitrogen atmosphere for a period sufficient to form a densified silicon nitride article.

9. The method for making silicon nitride articles comprising the following steps:

Step 1 - blending a mixture comprising a silicon nitride composition and polysilazane to form a blended mixture;

Step 2 - molding the product from step 1 to form a molded article;

Step 3 - pyrolyzing the product from step 2 in a non-oxidizing atmosphere and at a temperature sufficient to form a pyrolyzed article comprising amorphous silicon nitride and silicon carbide; and

Step 4 - sintering the product from step 3 in a non-oxidizing atmosphere and at a temperature sufficient to form a densified silicon nitride article.

10. A method in accordance with claim 9 wherein said molding of step 3 comprises slip-isostatic pressing.

11. A method in accordance with claim 9 wherein said molding of step 2 comprises pressing.

12. A method in accordance with claim 9 wherein said molding of step 2 comprises slip casting.

13. A method in accordance with claim 9 wherein said silicon nitride composition comprises silicon nitride and a densification aid.

14. A method in accordance with claim 13 wherein said densification aid is selected from the group consisting of alumina, yttria and combinations thereof.

15. A method in accordance with claim 9 wherein said mixture comprises from about 10 wt.% to about 40 wt.% of said polysilazane.

16. A method in accordance with claim 9 wherein said pyrolyzing in step 3 comprises heating at a temperature greater than 750°C in a nitrogen atmosphere for a period sufficient to form a pyrolyzed article comprising amorphous silicon nitride and silicon carbide.

17. A method in accordance with claim 9 wherein said sintering in step 4 comprises heating at a temperature equal to or greater than 1400°C in a nitrogen atmosphere for a period sufficient to form a densified silicon nitride article.

## DOCUMENTS CONSIDERED TO BE RELEVANT

EP 88112635.3

| Category | Citation of document with indication, where appropriate, of relevant passages | Relevant to claim | CLASSIFICATION OF THE APPLICATION (Int. Cl.4) |
|---|---|---|---|
| X | JP - A - 55-75 968 (KAGAKU GIJUTSUCHO MUKIZAISHITSU KENKYUSHOC) <br> * Totality * | 1,3,5, 7,8 | C 04 B 35/58 |
| X | WO - A1 - 80/00 021 (UNITED STATES OF AMERICA, U.S. DEPARTMENT OF COMMERCE) <br> * Claims * | 1,6-9, 15-17 | |
| Y | DE - A1 - 3 605 126 (TOYO SODA MANUFACTURING CO., LTD.) <br> * Claims * | 1,6-9, 15-17 | |

TECHNICAL FIELDS
SEARCHED (Int. Cl.4)

C 04 B

C 01 B

The present search report has been drawn up for all claims

| Place of search | Date of completion of the search | Examiner |
|---|---|---|
| VIENNA | 09-12-1988 | BECK |